(19) Europäisches Patentamt
European Patent Office
Office européen des brevets

(11) **EP 2 187 114 A1**

(12) **EUROPÄISCHE PATENTANMELDUNG**

(43) Veröffentlichungstag:
**19.05.2010 Patentblatt 2010/20**

(51) Int Cl.:
*F21V 5/00* (2006.01)     *F21S 8/12* (2006.01)
*G02B 3/00* (2006.01)     *F21W 101/10* (2006.01)

(21) Anmeldenummer: **09175138.8**

(22) Anmeldetag: **05.11.2009**

(84) Benannte Vertragsstaaten:
**AT BE BG CH CY CZ DE DK EE ES FI FR GB GR
HR HU IE IS IT LI LT LU LV MC MK MT NL NO PL
PT RO SE SI SK SM TR**

(30) Priorität: **07.11.2008 DE 102008056403**

(71) Anmelder: **Hella KGaA Hueck & Co.
59552 Lippstadt (DE)**

(72) Erfinder: **Kloos, Gerhard
59597, Erwitte (DE)**

(54) **Scheinwerfer für Fahrzeuge**

(57)     Die Erfindung betrifft einen Scheinwerfer für Fahrzeuge mit einer Mehrzahl von LED-Lichtquellen, die zur Bildung eines LED-Feldes auf einem gemeinsamen Substrat gruppiert angeordnet sind und die jeweils ein Teillichtbündel emittieren, und mit einer dem LED-Feld vorgelagerten Optikeinheit , so dass die Teillichtbündel der LED-Lichtquellen jeweils zu Lichtflecken im Verkehrsraum abbildbar sind zur Erzeugung einer vorgegebenen Lichtverteilung, wobei der Optikeinheit eine sich in Richtung der optischen Achse verjüngende Korrekturlinse zugeordnet ist, deren dem LED-Feld zugewandte Lichteintrittsfläche und deren dem LED-Feld abgewandte Lichtaustrittsfläche derart geformt sind, dass in einer senkrecht zur optischen Achse verlaufenden Querebene auf eine Winkelverteilung der Teillichtbündel gleichmäßig eingewirkt wird.

**Figur 2**

**Beschreibung**

Die Erfindung betrifft einen Scheinwerfer für Fahrzeuge mit einer Mehrzahl von LED-Lichtquellen, die zur Bildung eines LED-Feldes auf einem gemeinsamen Substrat gruppiert angeordnet sind und die jeweils ein Teillichtbündel emittieren, und mit einer dem LED-Feld vorgelagerten Optikeinheit, so dass die Teillichtbündel der LED-Lichtquellen jeweils zu Lichtflecken im Verkehrsraum abbildbar sind zur Erzeugung einer vorgegebenen Lichtverteilung.

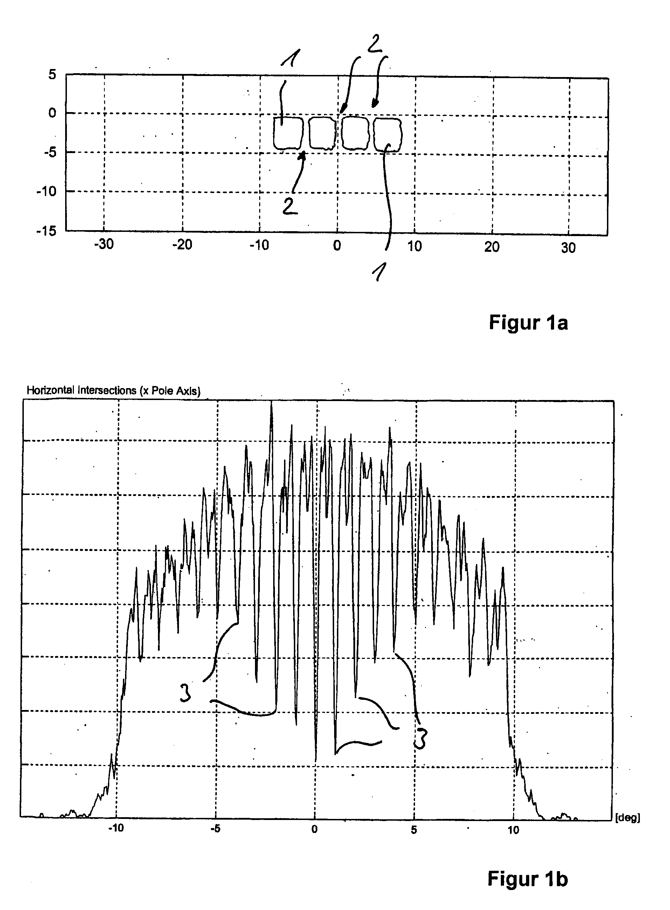

Aus der DE 10 2005 041 234 A1 ist ein Scheinwerfer für Fahrzeuge bekannt, der zum einen zur Bildung eines LED-Feldes eine Mehrzahl von auf einem gemeinsamen Substrat angeordneten LED-Lichtquellen und zum anderen eine dem LED-Feld in Lichtabstrahlrichtung vorgelagerte Optikeinheit aufweist. Die LED-Lichtquellen emittieren jeweils ein Teillichtbündel, die mittels der Optikeinheit zu einer Mehrzahl von eine vorgegebene Lichtverteilung bildenden Lichtflecken abgebildet werden. Dadurch, dass bei dem bekannten Scheinwerfer mindestens zwei Optikeinheiten mit jeweils einer unterschiedlichen Abbildungscharakteristik vorgesehen sind, können unterschiedlich große Lichtflecken zur Bildung der vorgegebenen Lichtverteilung überlagert werden. Bei Verwendung lediglich einer einzigen Optikeinheit hat sich jedoch gezeigt, dass zwischen den auf einem Messschirm abgebildeten Lichtflecken vertikale und horizontale Lichtlücken entstehen, die als störend empfunden werden. In Figur 1a ist eine auf einem Messschirm abgebildete Lichtverteilung eines bekannten Scheinwerfers mit einem LED-Feld bestehend aus vier LED-Lichtquellen (LED-Chips) und einer vorgelagerten Optikeinheit dargestellt. Zwischen den abgebildeten Lichtflecken 1 der LED-Chips entstehen die störenden horizontalen Lichtlücken 2. In Figur 1b ist die Beleuchtungsstärke über den Horizontalwinkel der Lichtverteilung dargestellt, die bei Abbildung eines aus mehreren LED-Chips bestehenden LED-Feldes aufweisenden bekannten Scheinwerfers erzeugt wird. Es ist ersichtlich, dass die Beleuchtungsstärkeverteilung im Horizontalschnitt eine Mehrzahl von relativen Minima 3 aufweist, die weit unterhalb der mittleren Beleuchtungsstärke, insbesondere unterhalb der halben Beleuchtungsstärke liegen. Wird versucht, durch Aufrauen einer oder mehrerer Oberflächen eines Optikelementes der Optikeinheit das Auftreten der vertikalen bzw. horizontalen Lichtlücken zu vermeiden, stellt sich ein "Verschmieren" der Lichtverteilung bzw. eine Aufweichung der Hell-Dunkel-Grenze der Lichtverteilung ein sowie relativ hohe Absorptionsverluste aufgrund der stochastischen Streuwirkung. Ein solches "Verschmieren" der Lichtverteilung beeinträchtigt insbesondere die Möglichkeit, einzelne LED-Lichtquellen in der Lichtverteilung kontrolliert auszuschalten, was für eine adressierbare Fernlichtfunktion zur Entblendung des Gegenverkehrs situationsabhängig erforderlich ist.

Aufgabe der vorliegenden Erfindung ist es daher, einen Scheinwerfer für Fahrzeuge mit einer Mehrzahl von LED-Lichtquellen und einer Optikeinheit derart weiterzubilden, dass eine homogene Lichtverteilung ohne das Auftreten von Lichtlücken zwischen abgebildeten Lichtflecken entsteht, so dass eine verbesserte Zu- und Abschaltbarkeit von einzelnen LED-Lichtquellen ermöglicht wird.

Zur Lösung dieser Aufgabe ist die Erfindung in Verbindung mit dem Oberbegriff des Patentanspruchs 1 **dadurch gekennzeichnet, dass** der Optikeinheit eine sich in Richtung der optischen Achse verjüngende Korrekturlinse zugeordnet ist, deren dem LED-Feld zugewandte Lichteintrittsfläche und deren dem LED-Feld abgewandte Lichtaustrittsfläche derart geformt sind, dass in einer senkrecht zur optischen Achse verlaufenden Querebene auf eine Winkelverteilung der Teillichtbündel gleichmäßig eingewirkt wird.

Der besondere Vorteil der Erfindung besteht darin, dass eine kontrollierte Beeinflussung der Lichtverteilung erzielt wird, so dass ein getrenntes Schalten einzelner LED-Lichtquellen in dem LED-Feld ohne das Auftreten von unerwünschten vertikalen und/oder horizontalen Lichtlücken entsteht. Grundgedanke der Erfindung ist es, einer Optikeinheit eine Korrekturlinse zuzuordnen, die die Lichtverteilung des Scheinwerfers isotrop in einer senkrecht zur optischen Achse des Scheinwerfers verlaufenden Querebene beeinflusst. Die Erfindung sieht somit keine Aufweitung der Lichtflecken in einer Vorzugsrichtung vor, sondern bewirkt eine Aufspreizung der Lichtflecken in allen Richtungen (360°) quer zur optischen Achse. Erfindungsgemäß erfolgt eine kontrollierte und gleichmäßige Einwirkung auf die Winkelverteilung der von den LED-Lichtquellen erzeugten Teillichtbündel.

Nach einer bevorzugten Ausführungsform der Erfindung weist eine Lichteintrittsfläche und eine Lichtaustrittsfläche der Korrekturlinse eine solche Wölbung auf, dass in einer zur optischen Achse verlaufenden Querebene die Winkelverteilung der Teillichtbündel der LED-Lichtquellen gleichmäßig so aufgespreizt werden, dass die abgebildeten Lichtflecken auf einem 10 m entfernten Messschirm unmittelbar aneinander liegend oder benachbart abgebildet sind. Vorteilhaft grenzen die Lichtflecken (leuchtende Rechtecke) des erfindungsgemäßen Scheinwerfers unmittelbar aneinander, so dass der Fahrer des mit dem Scheinwerfer ausgestatteten Fahrzeugs eine homogene Ausleuchtung des angestrahlten Verkehrsraums wahrnimmt.

Nach einer bevorzugten Ausführungsform der Erfindung ist die Lichteintrittsfläche und die Lichtaustrittsfläche der Korrekturlinse jeweils mit einer Wölbung ausgebildet, wobei die Wölbung der Lichteintrittfläche größer ist als die Wölbung der Lichtaustrittsfläche. Im Bereich der optischen Achse bzw. eines Scheitelbereichs der Korrekturlinse weist diese die geringste Dicke auf.

Nach einer Weiterbildung der Erfindung ist die Korrekturlinse zwischen der Optikeinheit und dem LED-Feld angeordnet und kann somit auf einfache Weise Platz sparend in einem vorhandenen Bauraum eines Scheinwerfers integriert werden.

Nach einer Weiterbildung der Erfindung erfolgt die vorgegebene Aufspreizung der Lichtflecken durch Einstellung der Wölbung und/oder Scheiteldicke und/ oder des Brechungsindexes der Korrekturlinse. In Abhängigkeit von dem Abstand der LED-Lichtquellen zueinander und einer Brennweite der nachgeordneten Optikeinheit kann somit eine Anpassung der vorgegebenen Baueinheiten des Scheinwerfers im Sinne einer kontrollierten "Annäherung" der Lichtflecken ermöglicht werden.

Nach einer bevorzugten Ausführungsform der Erfindung ist die Korrekturlinse sphärisch ausgebildet. Die Wölbung der Lichteintrittsfläche und der Lichtaustrittsfläche der Korrekturlinse bemisst sich vorzugsweise nach folgender mathematischen Formel: R2 + t = q x R1, wobei $R_1$ = Krümmungskreisradius der Lichteintrittsfläche, $R_2$ = Krümmungskreisradius der Lichtaustrittsfläche, t = Scheiteldicke und

$$q = \frac{n+1}{n} \text{ mit n =}$$

Brechungsindex der Korrekturlinse. Vorteilhaft lässt sich hierdurch ein relativ einfacher Aufbau des Scheinwerfers realisieren, wobei die Optikeinheit im Wesentlichen aus einer asphärischen Kolimationslinse besteht.

Ein Ausführungsbeispiel der Erfindung wird nachfolgend anhand der Zeichnungen näher erläutert.

Es zeigen:

Fig. 1 a   eine schematische Darstellung einer auf einem Messschirm abgebildeten Lichtverteilung eines bekannten Scheinwerfers mit einem LED-Feld bestehend aus vier LED-Chips und einer vorgelagerten Optikeinheit,

Fig. 1 b   eine Beleuchtungsstärkeverteilung über einen Horizontalwinkel eines bekannten Scheinwerfers, bei dem eine Mehrzahl von beabstandet zueinander angeordnete LED-Chips des LED-Feldes in Form von Lichtflecken abgebildet werden,

Fig. 2   einen schematischen Vertikalschnitt durch einen erfindungsgemäßen Scheinwerfer,

Fig. 3   eine perspektivische Darstellung des erfindungsgemäßen Scheinwerfers,

Fig. 4   eine schematische Darstellung einer Lichtverteilung eines erfindungsgemäßen Scheinwerfers mit einem LED-Feld bestehend aus vier LED-Chips sowie einer Optikeinheit sowie einer derselben zugeordneten Korrekturlinse gemäß Figur 2 und 3 und

Fig. 5   eine Beleuchtungsstärkeverteilung des erfindungsgemäßen Scheinwerfers über einen Horizontalwinkel, bei dem der Optikeinheit die Korrekturlinse zugeordnet ist.

Ein erfindungsgemäßer Scheinwerfer für Fahrzeuge besteht im Wesentlichen aus einer Lichtquelleneinheit 4, einer in Lichthauptabstrahlrichtung 5 vor der Lichtquelleneinheit 4 angeordneten Optikeinheit 6 und einer zwischen der Lichtquelleneinheit 4 und der Optikeinheit 6 angeordneten Korrekturlinse 7.

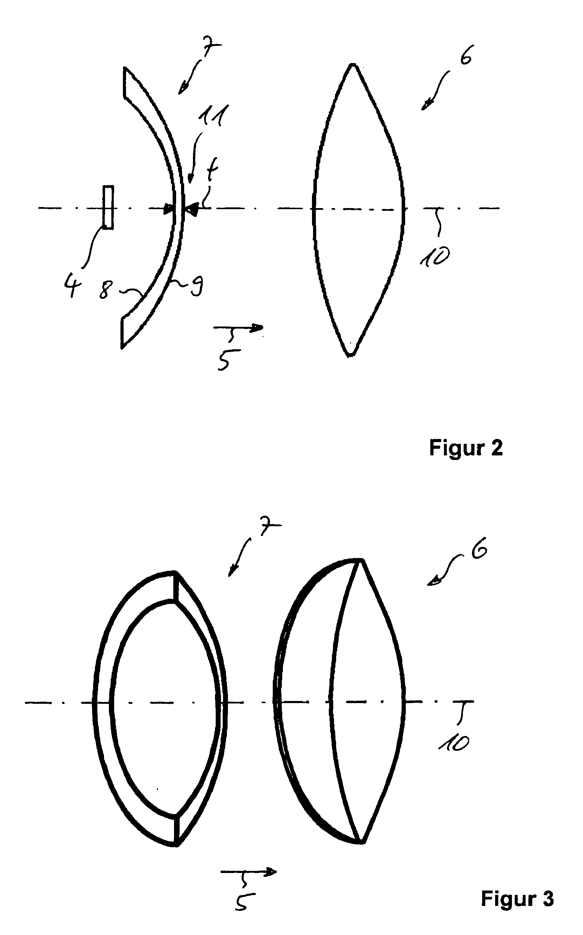

Wie aus den Figuren 2 und 3 ersichtlich ist, besteht die Optikeinheit 6 nach einer Ausführungsform der Erfindung aus einem einzigen Optikelement 6, nämlich einer asphärischen Kollimationslinse. Alternativ kann die Optikeinheit 6 auch aus einer Mehrzahl von Linsen (Linsengruppe) gebildet sein.

Die Lichtquelleneinheit 4 ist aus einer Mehrzahl von LED-Lichtquellen gebildet die reihen- oder matrixartig auf einem gemeinsamen Substrat zur Bildung eines LED-Feldes gruppiert angeordnet sind. Die LED-Lichtquellen können jeweils als LED-Chips ausgebildet sein, die jeweils ein Teillichtbündel in Lichthauptabstrahlrichtung 5 emittieren.

Die Optikeinheit 6 ist auf die Lichtquelleneinheit 4 abgestimmt, so dass die jeweils von den LED-Lichtquellen emittierten Teillichtbündel zu Lichtflecken 1 im Verkehrsraum zur Erzeugung einer Lichtverteilung geformt werden, beispielsweise zur Erzeugung einer Fernlichtverteilung oder Abblendlichtverteilung. In Figur 1 a sind beispielhaft vier Lichtflecken 1 dargestellt, die unter Bildung von Lichtlücken 2 beabstandet zueinander angeordnet sind.

Zur Vermeidung solcher Lichtlücken 2 ist die Korrekturlinse 7 vorgesehen, die vorzugsweise als sphärische Linse ausgebildet ist. Die Korrekturlinse 7 weist auf einer der Lichtquelleneinheit 4 zugewandten Seite eine gewölbte Lichteintrittsfläche 8 und auf einer der Lichtquelleneinheit 4 abgewandten Seite eine gewölbte Lichtaustrittsfläche 9 auf. Die Wölbung der Lichteintrittsfläche 8 ist größer als die Wölbung der Lichtaustrittfläche 9. Die Lichteintrittsfläche 8 und die Lichtaustrittsfläche 9 sind gleichsinnig gewölbt ausgebildet, wobei bei Projektion der Lichteintrittsfläche 8 und der Lichtaustrittsfläche 9 auf eine optische Achse 10 des Scheinwerfers die zur optischen Achse 10 näheren Flächenanteile einen größeren Abstand zur Lichtquelleneinheit 4 aufweisen als die zur optischen Achse 10 entfernten Flächenanteile. Die Lichteintrittsfläche 8 und die Lichtaustrittsfläche 9 sind somit zur Lichtquelleneinheit 4 hin geöffnet ausgebildet. Im vorliegenden Ausführungsbeispiel ist die Lichteintrittsfläche 8 konkav- und die Lichtaustrittsfläche 9 konvexförmig ausgebildet. In Richtung der optischen Achse 10 sind die Lichteintrittsfläche 8 und die Lichtaustrittsfläche 9 verjüngend ausgebildet.

Die Korrekturlinse 7 schneidet mit ihrem Scheitel 11 die optische Achse 10. Eine Scheiteldicke t der Korrekturlinse 7 ist kleiner als die Dicke der Korrekturlin-

se 7 in achsennahen und/oder achsenfernen Bereichen derselben.

Die Scheiteldicke t und/oder die Wölbung der Lichteintrittsfläche 8 und/oder der Lichtaustrittsfläche 8 und/oder der Brechungsindex n der Korrekturlinse 7 sind derart gewählt, dass die von den LED-Lichtquellen 4 abgesandten Teillichtbündel derart richtungsunabhängig aufgeweitet werden, dass unmittelbar aneinandergrenzende Lichtflecken 12 auf einem Messschirm mittels der Optikeinheit 6 gebildet werden. Die so gebildeten Lichtflecken 12 weisen weder vertikale noch horizontale Lichtlücken auf, so dass durch Ansteuerung der einzelnen LED-Lichtquellen (LED-Chips) definierte Verkehrsraumbereiche ausgeleuchtet bzw. nicht ausgeleuchtet werden, so dass eine genaue Adressierbarkeit eines Verkehrsraumteilbereiches ermöglicht wird. Dies kann zur verkehrssituationsabhängigen dynamischen Ausleuchtung des Verkehrsraums bzw. Entblendung eines entgegenkommenden Verkehrsteilnehmers genutzt werden.

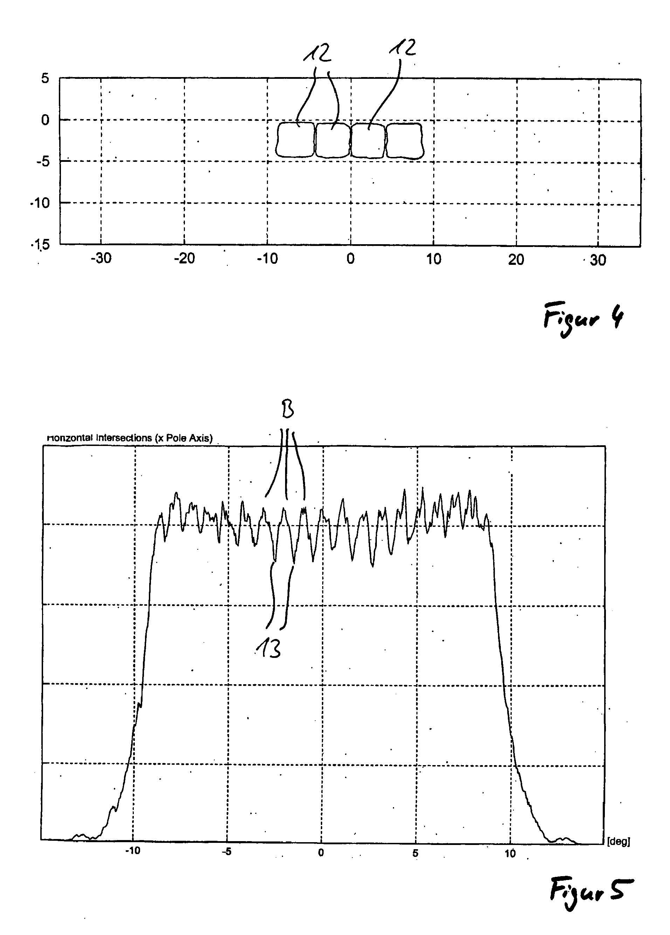

Wie aus Figur 5 ersichtlich ist, weist eine Beleuchtungsstärkeverteilung über die Horizontale eine verringerte Modulationstiefe bzw. keine so großen Schwankungen zwischen relativen Maxima und relativen Minima auf. Figur 5 zeigt eine Mehrzahl von Beleuchtungsstärkehöckern B, die jeweils durch Abbildung einer Reihe von LED-Chips 4 mittels der Korrekturlinse 7 und er Optikeinheit 6 erzeugt werden. Die Beleuchtungsstärkehöcker B sind durch relative Minima 13 voneinander getrennt, deren Ausschlag im Vergleich zu den relativen Minima 3 nach dem bekannten Scheinwerfer gemäß Figur 1 b kleiner ausfallen. Im Vergleich zu der unkorrigierten Abbildung - wie es aus Figur 1 b ersichtlich ist - werden relative Minima 13 gebildet, die oberhalb von 75 % der maximalen Beleuchtungsstärke liegen. Zwischen den relativen Minima 13 erstrecken sich die Beleuchtungsstärkehöcker B der Teillichtbündel der jeweiligen LED-Lichtquellen 4. Da die relativen Minima 13 bei dem erfindungsgemäßen Scheinwerfer einen wesentlich höheren Wert aufweisen als die relativen Minima 3 nach dem bekannten Scheinwerfer kann eine relativ homogene Beleuchtung des Verkehrsraumes beispielsweise bei einer adressierbaren Fernlichtfunktion wahrgenommen werden. Dadurch, dass nach dem erfindungsgemäßen Scheinwerfer relative Minima 13 gebildet werden, sind die Beleuchtungsstärkeverteilungskurven der einzelnen LED-Chips 4 derart ausreichend voneinander getrennt, dass ein gezieltes Ein- und Ausschalten einzelner LED-Chips 4 bzw. Reihen von LED-Chips in dem matrixartigen LED-Feld ermöglicht wird.

Durch Vergleich der Figuren 1 a und 1 b bezüglich des vorbekannten Scheinwerfers und der Figuren 4 und 5 bezüglich des erfindungsgemäßen Scheinwerfers wird deutlich, dass die Korrekturlinse 7 in einer senkrecht zur optischen Achse 10 verlaufenden Querebene auf eine Winkelverteilung der von den LED-Chips 4 emittierten Teillichtbündel derart gleichmäßig im Sinne einer Winkelaufspreizung einwirkt, dass die im Verkehrsraum abgebildeten Lichtflecken 12 relativ nah zueinander und voneinander abgrenzbar auf einem Messschirm abgebildet werden. Die hierdurch von der Korrekturlinse 7 bewirkte Winkelaufweitung erfolgt gleichmäßig sowohl in vertikaler als auch in horizontaler Richtung. Die Winkelaufweitung in horizontaler und vertikaler Richtung ist abhängig von dem Abstand der LED-Chips 4 zueinander auf dem Substrat einerseits und von einer Brennweite der nachgeordneten Optikeinheit 6 andererseits.

Im vorliegenden Ausführungsbeispiel berechnet sich die Wölbung bzw. Krümmungskreisradien der Lichteintrittsfläche 8 und der Lichtaustrittsfläche 9 nach folgender mathematischer Formel:

$$R_2 + t = q \times R_1,$$

wobei

$R_1$ = Krümmungskreisradius der Lichteintrittsfläche 8,
$R_2$ = Krümmungskreisradius der Lichtaustrittsfläche 9,
t = Scheiteldicke,

$$q = \frac{n+1}{n}$$

mit n = Brechungsindex der Korrekturlinse 7.

Die Erfindung ermöglicht durch Integration der Korrekturlinse 7 eine relativ einfache und genau einstellbare Winkelaufspreizung der von der Lichtquelleneinheit 4 abgesandten Teillichtbündel, so dass unerwünschte Lichtlücken 2 in einer Lichtstärkeverteilung des Scheinwerfers auf kontrollierte Weise geschlossen werden können.

Bezugszeichenliste

1      Lichtflecken
2      Lichtlücken
3      relative Minima
4      Lichtquelleneinheit
5      Lichthauptabstrahlrichtung
6      Optikeinheit
7      Korrekturlinse
8      Lichteintrittsfläche
9      Lichtauskoppelfläche
10     optische Achse
11     Scheitel
12     Lichtflecken
13     relative Minima
t      Scheiteldicke
B      Beleuchtungsstärkehöcker

**Patentansprüche**

1. Scheinwerfer für Fahrzeuge mit einer Mehrzahl von LED-Lichtquellen, die zur Bildung eines LED-Feldes auf einem gemeinsamen Substrat gruppiert angeordnet sind und die jeweils ein Teillichtbündel emittieren, und mit einer dem LED-Feld vorgelagerten Optikeinheit, so dass die Teillichtbündel der LED-Lichtquellen jeweils zu Lichtflecken im Verkehrsraum abbildbar sind zur Erzeugung einer vorgegebenen Lichtverteilung, **dadurch gekennzeichnet, dass** der Optikeinheit (6) eine sich in Richtung der optischen Achse (10) verjüngende Korrekturlinse (7) zugeordnet ist, deren dem LED-Feld (4) zugewandte Lichteintrittsfläche (8) und deren dem LED-Feld (4) abgewandte Lichtaustrittsfläche (9) derart geformt sind, dass in einer senkrecht zur optischen Achse (10) verlaufenden Querebene auf eine Winkelverteilung der Teillichtbündel gleichmäßig eingewirkt wird.

2. Scheinwerfer nach Anspruch 1, **dadurch gekennzeichnet, dass** die Lichteintrittsfläche (8) und die Lichtaustrittsfläche (9) der Korrekturlinse (7) derart geformt sind, dass in der senkrecht zu der optischen Achse (10) verlaufenden Querebene die Winkelverteilung der Teillichtbündel gleichmäßig aufgespreizt wird.

3. Scheinwerfer nach Anspruch 1 oder 2, **dadurch gekennzeichnet, dass** die Lichteintrittsfläche (8) und die Lichtaustrittsfläche (9) der Korrekturlinse (7) jeweils zu dem LED-Feld (4) offen gewölbt ausgebildet sind, wobei die Wölbung der Lichteintrittsfläche (8) größer ist als die Wölbung der Lichtaustrittsfläche (9).

4. Scheinwerfer nach einem der Ansprüche 1 bis 3, **dadurch gekennzeichnet, dass** die Korrekturlinse (7) zwischen der Optikeinheit (6) und dem LED-Feld (4) angeordnet ist.

5. Scheinwerfer nach einem der Ansprüche 1 bis 4, **dadurch gekennzeichnet, dass** die Korrekturlinse (7) eine solche Wölbung und/oder eine solche Scheiteldicke (t) und/oder einen solchen Brechungsindex (n) aufweist, dass die Teillichtbündel der LED-Lichtquellen (4) unter Bildung einer vorgegebenen Winkelaufweitung zu der Optikeinheit (6) übertragen werden.

6. Scheinwerfer nach einem der Ansprüche 1 bis 5, **dadurch gekennzeichnet, dass** die durch die Korrekturlinse (7) bewirkte Winkelaufweitung von dem Abstand der LED-Lichtquellen (4) zueinander auf dem Substrat und/oder von einer Brennweite der nachgeordneten Optikeinheit (6) abhängig ist.

7. Scheinwerfer nach einem der Ansprüche 1 bis 6, **dadurch gekennzeichnet, dass** die Korrekturlinse (7) sphärisch ausgebildet ist.

8. Scheinwerfer nach einem der Ansprüche 1 bis 7, **dadurch gekennzeichnet, dass** die Wölbung der Lichteintrittsfläche (8) und der Lichtaustrittsfläche (9) der Korrekturlinse (7) nach der mathematischen Formel

$$R_2 + t = q \times R_1,$$

wobei $R_1$ = Krümmungskreisradius der Lichteintrittsfläche (8),

$R_2$ = Krümmungskreisradius der Lichtaustrittsfläche (9),
t = Scheiteldicke und

$$q = \frac{n+1}{n}$$

mit n = Brechungsindes der Korrekturlinse (7) berechnet ist.

9. Scheinwerfer nach einem der Ansprüche 1 bis 8, **dadurch gekennzeichnet, dass** die Optikeinheit (6) eine asphärische Kollimationslinse aufweist.

10. Scheinwerfer nach einem der Ansprüche 1 bis 9, **dadurch gekennzeichnet, dass** die LED-Lichtquellen jeweils als LED-Chips (4) ausgebildet sind.

**Figur 1a**

Horizontal Intersections (x Pole Axis)

[deg]

**Figur 1b**

Figur 2

Figur 3

*Figur 4*

Horizontal Intersections (x Pole Axis)

[deg]

*Figur 5*

**EP 2 187 114 A1**

Europäisches Patentamt
European Patent Office
Office européen des brevets

## EUROPÄISCHER RECHERCHENBERICHT

Nummer der Anmeldung

EP 09 17 5138

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 101 45 964 A1 (KOITO MFG CO LTD [JP]) 4. April 2002 (2002-04-04) * Zusammenfassung; Abbildung 3 * ----- | 1-2,4-10 | INV. F21V5/00 F21S8/12 G02B3/00 |
| Y | DE 10 2004 019857 A1 (KOITO MFG CO LTD [JP]) 9. Dezember 2004 (2004-12-09) * Zusammenfassung; Abbildungen * ----- | 1-10 | ADD. F21W101/10 |
| Y | DE 100 05 654 A1 (VALEO VISION [FR]) 10. August 2000 (2000-08-10) * Spalte 31, Zeile 44 - Spalte 3, Zeile 34; Abbildung 2 * ----- | 1-10 | |
| A | DE 33 11 762 A1 (BOSCH GMBH ROBERT [DE]) 4. Oktober 1984 (1984-10-04) * Seiten 5-6; Abbildung 1 * ----- | 1-10 | |
| A | DE 198 13 597 A1 (VOLKSWAGEN AG [DE]) 30. September 1999 (1999-09-30) * Zusammenfassung; Abbildungen * ----- | 1-10 | |
| A | US 2006/028831 A1 (ISHIDA HIROYUKI [JP]) 9. Februar 2006 (2006-02-09) * Abbildungen 1,5 * ----- | 1-10 | RECHERCHIERTE SACHGEBIETE (IPC) F21V F21S |
| A | EP 1 225 386 A2 (ICHIKO INDUSTRIES LTD [JP]) 24. Juli 2002 (2002-07-24) * Abbildungen 1,20b,22 * ----- | 1-10 | |

Der vorliegende Recherchenbericht wurde für alle Patentansprüche erstellt

| Recherchenort | Abschlußdatum der Recherche | Prüfer |
|---|---|---|
| München | 4. März 2010 | Panatsas, Adam |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

9

**ANHANG ZUM EUROPÄISCHEN RECHERCHENBERICHT
ÜBER DIE EUROPÄISCHE PATENTANMELDUNG NR.**

EP 09 17 5138

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-03-2010

| Im Recherchenbericht angeführtes Patentdokument | Datum der Veröffentlichung | Mitglied(er) der Patentfamilie | Datum der Veröffentlichung |
|---|---|---|---|
| DE 10145964 A1 | 04-04-2002 | FR 2814221 A1<br>JP 3839237 B2<br>JP 2002093213 A<br>US 2002034078 A1 | 22-03-2002<br>01-11-2006<br>29-03-2002<br>21-03-2002 |
| DE 102004019857 A1 | 09-12-2004 | CN 1542320 A<br>FR 2854227 A1<br>JP 4245968 B2<br>JP 2004327188 A<br>KR 20040092437 A<br>US 2004223337 A1 | 03-11-2004<br>29-10-2004<br>02-04-2009<br>18-11-2004<br>03-11-2004<br>11-11-2004 |
| DE 10005654 A1 | 10-08-2000 | FR 2789474 A1 | 11-08-2000 |
| DE 3311762 A1 | 04-10-1984 | KEINE | |
| DE 19813597 A1 | 30-09-1999 | KEINE | |
| US 2006028831 A1 | 09-02-2006 | JP 2006049190 A | 16-02-2006 |
| EP 1225386 A2 | 24-07-2002 | US 2002145370 A1 | 10-10-2002 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- DE 102005041234 A1